# EUROPEAN PATENT APPLICATION

(11) **EP 4 718 596 A1**
(43) Date of publication of application: **01.04.2026**
(21) Application number: 24203345.4
(22) Date of filing: 27.09.2024
(51) Int. Cl.: H01M 50/204, H01M 50/209, H01M 50/244, H01M 50/249

(54) **A BATTERY PACK, A VEHICLE AND A METHOD FOR ASSEMBLING A BATTERY PACK**

(71) Applicant: Volvo Truck Corporation, 405 08 Göteborg (SE)
(72) Inventor: Lindelöw, Fredrik, 541 94 Skövde (SE); Irannezhad, Mike, 413 30 Göteborg (SE); Rout, Dhirendra, 422 54 Göteborg (SE); Jonsson, Kasper, 417 57 Göteborg (SE)
(74) Representative: Kransell & Wennborg KB

(57) **Abstract**

The disclosure relates to a battery pack (1) comprising:
- a plurality of battery cell stacks (BS11, BS12, BS21, BS22), each one comprising a plurality of battery cells (2) arranged along a longitudinal direction (L), the plurality of battery cell stacks (BS11, BS12, BS21, BS22) comprising a first primary battery cell stack (BS11) and a second primary battery cell stack (BS21),
- a housing structure (3) accommodating the plurality of battery cell stacks (BS11, BS12, BS21, BS22), the housing structure (3) comprising a first side wall (31), a second side wall (32), a first base plate (33), a second base plate (34) and a partition wall (35). The disclosure also relates to a vehicle (100) and a method for assembling a battery pack (1).

## Description

### TECHNICAL FIELD

The disclosure relates generally to energy storage systems. In particular aspects, the disclosure relates to a battery pack, a vehicle, and a method for assembling a battery pack. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery cell stacks, or battery modules, wherein each battery cell stack comprises a stack of battery cells. The battery cells may be prismatic battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery pack is provided. The battery pack has a longitudinal extension along a longitudinal direction, a width extension along a width direction and a height extension along a height direction, the battery pack comprising:
- a plurality of battery cell stacks, each one comprising a plurality of battery cells arranged along the longitudinal direction, the plurality of battery cell stacks comprising a first primary battery cell stack and a second primary battery cell stack,
- a housing structure accommodating the plurality of battery cell stacks, the housing structure comprising a first side wall, a second side wall, a first base plate, a second base plate and a partition wall,
wherein
each one of the first and second side walls extends in the longitudinal direction and the height direction and each one of the first and second base plates extends in the longitudinal direction and the width direction,
the first and second side walls are offset from each other in the width direction and the first and second base plates are offset from each other in the height direction such that an accommodation space accommodating the plurality of battery cell stacks is formed therebetween,
the partition wall extends in the longitudinal direction and the width direction in the accommodation space and separates the accommodation space such that a first sub-space and a second sub-space arranged along the height direction are formed therein,
the first primary battery cell stack is provided in the first sub-space which is adjacent the first base plate and the second primary battery cell stack is provided in the second sub-space which is adjacent the second base plate,
the first primary battery cell stack further comprises at least one first primary transverse beam member extending in the width direction,
the first base plate is attached to the first side wall and to the second side wall, and the first primary battery cell stack is attached to the first base plate via the at least one first primary transverse beam member. By way of example, the first base plate is preferably attached to the first side wall by at least one first fastener and to the second side wall by at least one second fastener, and/or the first primary battery cell stack is preferably attached to the first base plate via the at least one first primary transverse beam member by at least one third fastener. The first aspect of the disclosure may seek to provide an improved battery pack which is robust, reliable, cost-effective and/or space efficient. A technical benefit may include that the battery cells may be efficiently packaged in a robust and rigid housing structure. For example, by attaching the first primary battery cell stack to the first base plate via the at least one first primary transverse beam member as disclosed herein, a structurally rigid battery pack configuration may be achieved which also may be beneficial for manufacturing of the battery pack. In addition, by providing the battery cell stacks in the first and second sub-spaces as disclosed herein, a rigid and robust packaging of the battery cells may be achieved.

A battery cell stack as disclosed herein may also be referred to as a battery module. The battery cell stack may be defined as an individual sub-unit of the battery pack, comprising a plurality of battery cells packaged together to one unit.

The directions as used herein, i.e., longitudinal direction, width direction and height direction, are perpendicular to each other. Even though the height direction in some examples may refer to a vertical direction, it shall be noted that the height direction may not necessarily correspond to a vertical direction. Hence, the orientation of the battery pack in e.g. a vehicle or a stationary machinery may be varied depending on the current circumstances.

Optionally in some examples, including in at least one preferred example, the second primary battery cell stack further comprises at least one second primary transverse beam member extending in the width direction,
the second base plate is attached to the first side wall and to the second side wall, and the second primary battery cell stack is attached to the second base plate via the at least one second primary transverse beam member. By way of example, the second base plate is preferably attached to the first side wall by least one fourth fastener and to the second side wall by at least one fifth fastener, and/or the second primary battery cell stack is preferably attached to the second base plate via the at least one second primary transverse beam member by at least one sixth fastener. A technical benefit may include that, by attaching the second primary battery cell stack to the second base plate via the at least one second primary transverse beam member as disclosed herein, a rigid structure may be achieved which also may be beneficial for manufacturing of the battery pack.

Optionally in some examples, including in at least one preferred example, the plurality of battery cell stacks further comprises a first secondary battery cell stack provided in the first sub-space and located closer to the partition wall along the height direction than the first primary battery cell stack. A technical benefit may include that an improved and more space efficient packaging of the battery cells is achieved, e.g., a more space efficient packaging in the height direction of the battery pack may be achieved.

Optionally in some examples, including in at least one preferred example, the first secondary battery cell stack further comprises at least one first secondary transverse beam member extending in the width direction, and the first secondary battery cell stack is attached to the first primary battery cell stack via the first secondary transverse beam member and the first primary transverse beam member. By way of example, the first secondary battery cell stack may be attached to the first primary battery cell stack via the first secondary transverse beam member and the first primary transverse beam member by at least one seventh fastener. A technical benefit may include that, by attaching the two battery cell stacks via their transverse beam members, a robust attachment is achieved which also is space efficient. A technical benefit may also include that the first primary battery cell stack and the first secondary battery cell stack may be treated as a separate sub-assembly of the battery pack, thereby facilitating manufacturing of the battery pack.

Optionally in some examples, including in at least one preferred example, the plurality of battery cell stacks further comprises a second secondary battery cell stack provided in the second sub-space and located closer to the partition wall along the height direction than the second primary battery cell stack. A technical benefit may include that an improved and more space efficient packaging of the battery cells is achieved, e.g., a more space efficient packaging in the height direction of the battery pack may be achieved.

Optionally in some examples, including in at least one preferred example, the second secondary battery cell stack further comprises at least one second secondary transverse beam member extending in the width direction, and the second secondary battery cell stack is attached to the second primary battery cell stack via the second secondary transverse beam member and the second primary transverse beam member. By way of example, the second secondary battery cell stack may be attached to the second primary battery cell stack via the second secondary transverse beam member and the second primary transverse beam member by at least one eighth fastener. A technical benefit may include that, by attaching the two battery cell stacks via their transverse beam members, a robust attachment is achieved which also is space efficient. A technical benefit may also include that the second primary battery cell stack and the second secondary battery cell stack may be treated as a separate sub-assembly of the battery pack, thereby facilitating manufacturing of the battery pack.

Optionally in some examples, including in at least one preferred example, at least one transverse beam member of the at least one first primary transverse beam member, the at least one second primary transverse beam member, the at least one first secondary transverse beam member, and/or the at least one second secondary transverse beam member is an intermediate transverse beam member which is located in-between two adjacently arranged battery cells of the respective battery cell stack. A technical benefit may include that a structurally rigid configuration is achieved which allows the battery pack to be longer in the longitudinal direction, i.e., by using one or more intermediate transverse beam members with respective attachment interfaces.

Optionally in some examples, including in at least one preferred example, at least one of the plurality of battery cell stacks further comprises a cooling plate member extending in the longitudinal direction and the width direction, and being provided adjacent the plurality of battery cells, wherein the cooling plate member comprises at least one coolant conduit for coolant. A technical benefit may include improved cooling of the battery cells. The cooling plate member is preferably located above or below the battery cells of the battery cell stack, as seen in the height direction.

Optionally in some examples, including in at least one preferred example, the plurality of battery cells are prismatic battery cells with a bottom surface, a top surface and four intermediate side surfaces. A technical benefit may include that a battery pack with high energy density is achieved.

Optionally in some examples, including in at least one preferred example, each one of the prismatic battery cells comprises an electric terminal which is provided on an intermediate side surface which faces away from the battery cell in a direction along the width direction. Preferably, each one of the prismatic battery cells comprises a first electrical terminal on a first intermediate side surface which faces away from the battery cell in a first direction along the width direction and a second electrical terminal on a second intermediate side surface which faces away from the battery cell in a second direction along the width direction, wherein the first and second directions are opposite directions.

Optionally in some examples, including in at least one preferred example, at least one of the plurality of battery cell stacks further comprises a longitudinally extending side beam member arranged to support the plurality of battery cells of the battery cell stack, wherein the longitudinally extending side beam member is provided at a longitudinally extending corner of the battery cell stack. A technical benefit may include that a more structurally rigid battery cell stack is achieved, allowing the battery cell stack to be longer in the longitudinal direction without compromising with the structural rigidity. By way of example, the battery cell stack may comprise more than one, such as two or four, longitudinally extending side beam members arranged to support the plurality of battery cells of the battery cell stack, wherein each longitudinally extending side beam member is provided at a respective longitudinally extending corner of the battery cell stack. Additionally, or alternatively, the longitudinally extending side beam member is preferably attached to at least one transverse beam member of the battery cell stack, such as by a weld.

Optionally in some examples, including in at least one preferred example, the longitudinally extending side beam member is L-shaped, as seen in a sectional view which is perpendicular to the longitudinal direction. Preferably, the L-shaped longitudinally extending side beam member is provided at the longitudinally extending corner of the battery cell stack such that it partly encloses the bottom surfaces and the adjacent intermediate side surfaces of the battery cells. A technical benefit may include that a more structurally rigid battery cell stack is achieved, allowing the battery cell stack to be longer in the longitudinal direction without compromising with the structural rigidity.

Optionally in some examples, including in at least one preferred example, the partition wall attaches the first and second side walls to each other, such as by welds. A technical benefit may include that the structural rigidity of the housing structure is improved, e.g., resulting in a substantially H-shaped housing structure, as seen in a sectional plane which is perpendicular to the longitudinal direction.

Optionally in some examples, including in at least one preferred example, the battery pack further comprises a first end plate provided at a first outer end of the battery pack in the longitudinal direction and a second end plate provided at a second outer end of the battery pack in the longitudinal direction, wherein the first and second end plates are arranged to close the accommodation space at its respective first and second outer end. A technical benefit may include that a closed housing structure is achieved. At least one of the first end plate and the second end plate is preferably removably attached to the housing structure. A technical benefit may include that servicing of the battery cells is facilitated.

Optionally in some examples, including in at least one preferred example, at least one of the first and second end plate comprises a coolant path for coolant to/from the plurality of battery cell stacks and/or an opening for electric elements, such as an electric cable. A technical benefit may include that the end plate(s) is/are used for the coolant path(s) and electric elements, thereby allowing the base plates and the side walls to be structurally intact without any openings. This may result in a more structurally rigid housing structure.

According to a second aspect of the disclosure, a vehicle is provided. The vehicle comprises a battery pack according to any one of the examples of the first aspect of the disclosure. The second aspect of the disclosure may seek to provide a vehicle with a battery pack which is robust, reliable, cost-effective and/or space efficient. Advantages and technical benefits of the second aspect of the disclosure are analogous to the advantages and technical benefits of the first aspect of the disclosure.

According to a third aspect of the disclosure, a method for assembling a battery pack according to any one of the examples of the first aspect of the disclosure is provided. The method comprises:
- providing a first sub-assembly comprising the first primary battery cell stack attached to the first base plate,
- inserting the first sub-assembly into the first sub-space, and
- attaching the first sub-assembly to the first side wall and to the second side wall via the first base plate. By way of example, the method may comprise attaching the first sub-assembly to the first side wall by the at least one first fastener and to the second side wall by the at least one second fastener. The third aspect of the disclosure may seek to provide a cost-effective and reliable method for assembling a battery pack. A technical benefit may include that by providing one or more sub-assemblies as disclosed herein, wherein the one or more sub-assemblies is/are initially separate from the housing structure, the assembly procedure may be facilitated. For example, this approach may imply that an already preassembled group of battery cells or battery cell stacks is inserted into one of the sub-spaces. Hence, this may also imply that it may be easier to repair and/or replace the preassembled group of battery cells or battery cell stacks from the battery pack.

Optionally in some examples, including in at least one preferred example, the method further comprises:
- providing a second sub-assembly comprising the second primary battery cell stack attached to the second base plate,
- inserting the second sub-assembly into the second sub-space (42), and
- attaching the second sub-assembly to the first side wall and to the second side wall via the second base plate. By way of example, the method may comprise attaching the second sub-assembly to the first side wall by the at least one fourth fastener and to the second side wall by the at least one fifth fastener. A technical benefit may include that by providing two sub-assemblies as disclosed herein, wherein the two sub-assemblies are initially separate from the housing structure, the assembly procedure may be further facilitated.

Optionally in some examples, including in at least one preferred example, the method further comprises:
- attaching the second secondary battery cell stack to the second primary battery cell stack prior to inserting the second sub-assembly into the second sub-space. By way of example, the method may comprise attaching the second secondary battery cell stack to the second primary battery cell stack by the at least one eighth fastener prior to inserting the second sub-assembly into the second sub-space. A technical benefit may include that an already preassembled group of more than one battery cell stack is inserted into the second sub-space in one single action.

Optionally in some examples, including in at least one preferred example, the method further comprises:
- attaching the first secondary battery cell stack to the first primary battery cell stack prior to inserting the first sub-assembly into the first sub-space. By way of example, the method may comprise attaching the first secondary battery cell stack to the first primary battery cell stack by the at least one seventh fastener prior to inserting the first sub-assembly into the first sub-space A technical benefit may include that an already preassembled group of more than one battery cell stack is inserted into the first sub-space in one single action.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary battery pack according to an example.
**FIG. 3** is an exemplary battery cell stack according to an example.
**FIG. 4** are exemplary battery cell stacks according to an example.
**FIG. 5** is an exemplary sub-assembly according to an example.
**FIG. 6** is an exemplary sub-assembly according to an example.
**FIG. 7** is an exemplary battery cell according to an example.
**FIG. 8** is an exemplary housing structure and sub-assembly according to an example.
**FIG. 9** is an exemplary housing structure and sub-assembly according to an example.
**FIG. 10** is an exemplary battery pack according to an example.
**FIG. 11** is an exemplary battery pack according to an example.
**FIG. 12** is a flowchart of a method according to an example.
**FIG. 13** is an exemplary battery pack according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery pack which is robust, reliable, cost-effective and/or space efficient. Additionally, an aim of the present disclosure is to provide an improved battery pack, vehicle, and/or method for assembling a battery pack, which at least partly alleviate one or more drawbacks of the prior art, or which at least are suitable alternatives. For example, by attaching the first primary battery cell stack to the first base plate via the at least one first primary transverse beam member as disclosed herein, a structurally rigid battery pack configuration may be achieved which also may be beneficial for manufacturing of the battery pack. In addition, by providing the battery cell stacks in the first and second sub-spaces as disclosed herein, a rigid and robust packaging of the battery cells may be achieved.

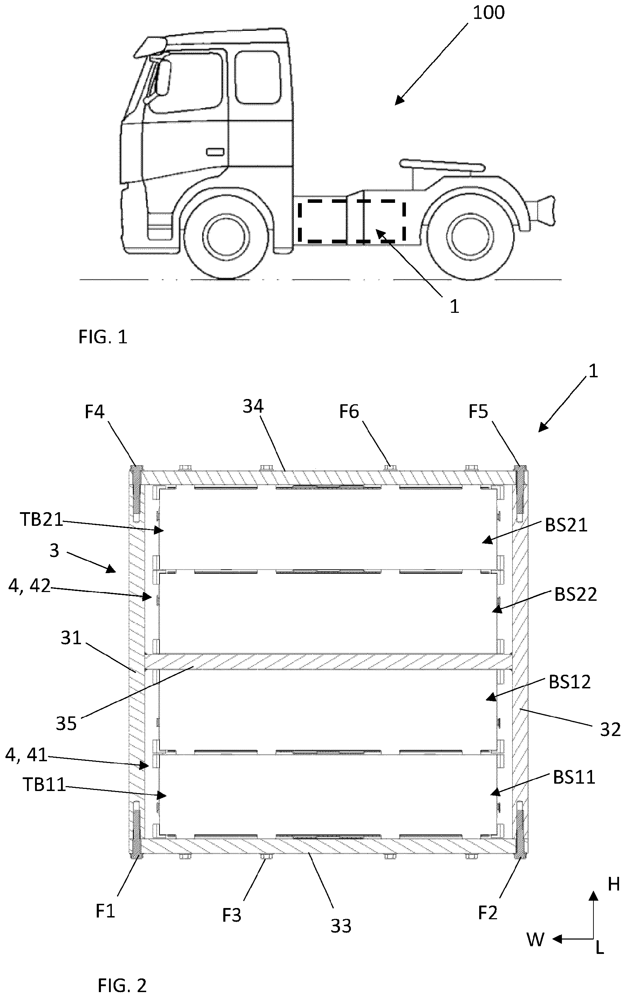

**FIG. 1** is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a battery pack 1 according to an example disclosed herein. The battery pack 1 may at least partly be used for driving one or more electric motors (not shown) of the vehicle 100. The vehicle 100 may accordingly be an electric vehicle or a hybrid vehicle, i.e., a vehicle which at least partly uses electric power for propulsion. The battery pack 1 as disclosed herein may also be used in a stationary unit, such as a building and/or any stationary machinery.

**FIG. 2** is an exemplary battery pack 1 in a sectional view according to an example. The battery pack 1 in FIG. 2 may for example be used in the vehicle 100 shown in FIG. 1.

The battery pack 1 has a longitudinal extension along a longitudinal direction L, a width extension along a width direction W and a height extension along a height direction H. The three directions are perpendicular to each other. The directions L, W, and H may correspond to a Cartesian coordinate system. In some examples, the height direction H may correspond to a height direction of the vehicle 100 when the battery pack 1 is provided in the vehicle 100. However, it shall be noted that the battery pack 1 may also be oriented differently in the vehicle 100, or in any other stationary unit.

The sectional view in FIG. 2 is corresponds to a sectional plane which is perpendicular to the longitudinal direction L.

The battery pack 1 comprises a plurality of battery cell stacks BS11, BS12, BS21, BS22, each one comprising a plurality of battery cells 2 (not shown in FIG. 2) arranged along the longitudinal direction L. The plurality of battery cell stacks BS11, BS12, BS21, BS22 comprises a first primary battery cell stack BS11 and a second primary battery cell stack BS21.

The battery pack 1 further comprises a housing structure 3 accommodating the plurality of battery cell stacks BS11, BS12, BS21, BS22. The housing structure 3 comprises a first side wall 31, a second side wall 32, a first base plate 33, a second base plate 34 and a partition wall 35. The housing structure 3 may be made of any type of structurally rigid material, such as metal, e.g. steel or aluminum, polymer, e.g. fiber-reinforced polymer, or carbon fiber.

Each one of the first and second side walls 31, 32 extends in the longitudinal direction L and the height direction H and each one of the first and second base plates 33, 34 extends in the longitudinal direction L and the width direction W. The first and second side walls 31, 32 are offset from each other in the width direction W and the first and second base plates 33, 34 are offset from each other in the height direction H such that an accommodation space 4 accommodating the plurality of battery cell stacks BS11, BS12, BS21, BS22 is formed therebetween.

The partition wall 35 extends in the longitudinal direction L and the width direction W in the accommodation space 4 and separates the accommodation space 4 such that a first sub-space 41 and a second sub-space 42 arranged along the height direction H are formed therein. By way of example, the partition wall 35 may as shown attach the first and second side walls 31, 32 to each other, such as by welds.

The first primary battery cell stack BS11 is provided in the first sub-space 41 which is adjacent the first base plate 33 and the second primary battery cell stack BS21 is provided in the second sub-space 42 which is adjacent the second base plate 34.

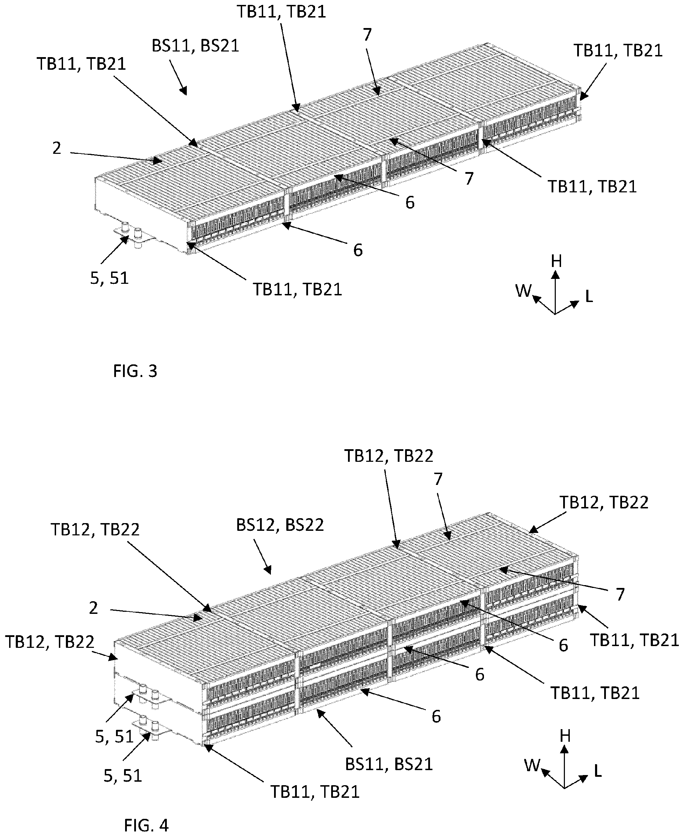

**FIG. 3** is an exemplary battery cell stack BS11, BS21 in perspective view according to an example. More specifically, the example in FIG. 3 shows a first primary battery cell stack BS11 or a second primary battery cell stack BS21 as e.g. depicted in FIG. 2. Accordingly, the first and second primary battery cell stacks BS11, BS21 may in some examples be identical.

The first primary battery cell stack BS11 further comprises at least one first primary transverse beam member TB11 extending in the width direction W. In the shown example, the first primary battery cell stack BS11 comprises five first primary transverse beam members TB11 which are offset from each other in the longitudinal direction L.

FIG. 3 further depicts the stacking of the battery cells 2 in the longitudinal direction L. The battery cells 2 may for example be stacked together in individual groups of battery cells 2, wherein the battery cells 2 in each group are attached to each other by at least one strap 7 wrapped around the battery cells 2. In the shown example, two straps 7 are used for each individual group of battery cells 2.

With reference to e.g. FIG. 2 and FIG. 3, the first base plate 33 is attached to the first side wall 31, such as by least one first fastener F1, and to the second side wall 32, such as by at least one second fastener F2, and the first primary battery cell stack BS11 is attached to the first base plate 33 via the at least one first primary transverse beam member TB11, such as by at least one third fastener F3. The fasteners as disclosed herein may be any type of fastener, such as a screw, bolt, rivet, or any other fastening element. In some examples, the attachments as disclosed herein may be accomplished by welds, or any other attachment technique. A longitudinal extension of any one of the fasteners as disclosed herein may as shown in the figures extend along the height direction H. In other examples, the longitudinal extension of any one of the fasteners as disclosed herein may extend in the width direction W or the longitudinal direction L.

The second primary battery cell stack BS21 may as shown in e.g. FIG. 2 and FIG. 3 further comprise at least one second primary transverse beam member (TB21) extending in the width direction (W). The second base plate 34 may be attached to the first side wall 31, such as by least one fourth fastener F4, and to the second side wall 32, such as by at least one fifth fastener F5, and the second primary battery cell stack BS21 may be attached to the second base plate 34 via the at least one second primary transverse beam member TB21, such as by at least one sixth fastener F6.

As shown in e.g. FIG. 2, the plurality of battery cell stacks may further comprise a first secondary battery cell stack BS12 provided in the first sub-space 41 and located closer to the partition wall 35 along the height direction H than the first primary battery cell stack BS11. As further shown in e.g. FIG. 2, the plurality of battery cell stacks may further comprise a second secondary battery cell stack BS22 provided in the second sub-space 42 and located closer to the partition wall 35 along the height direction H than the second primary battery cell stack BS21. It shall be noted that the battery pack may comprise more battery cell stacks in any one of the first and second sub-spaces 41, 42.

**FIG. 4** is an example of two battery cell stacks BS11, BS12 or BS21, BS22, when arranged on top of each other. The battery cell stacks in FIG. 4 may e.g. be the battery cell stacks shown in FIG. 2.

With reference to e.g. FIG 3 and FIG. 4, it is shown that at least one transverse beam member of the at least one first primary transverse beam member TB11, the at least one second primary transverse beam member TB21, may be an intermediate transverse beam member which is located in-between two adjacently arranged battery cells 2 of the respective battery cell stack. Thereby, a more structurally rigid battery cell stack may be achieved, e.g., allowing the battery cell stack to be longer in the longitudinal direction L. Additionally, or alternatively, at least one transverse beam member of the at least one first primary transverse beam member TB11, the at least one second primary transverse beam member TB21, may as shown be an outer end transverse beam member.

FIG. 3 and FIG. 4 further shows that at least one of the plurality of battery cell stacks BS11, BS12, BS21, BS22 may further comprise a cooling plate member 5 which extends in the longitudinal direction L and the width direction W, and is provided adjacent the plurality of battery cells 2. Preferably, the cooling plate member 5 may as shown be provided below the plurality of battery cells 2, as seen in the height direction H. The cooling plate member 5 comprises at least one coolant conduit 51 for coolant.

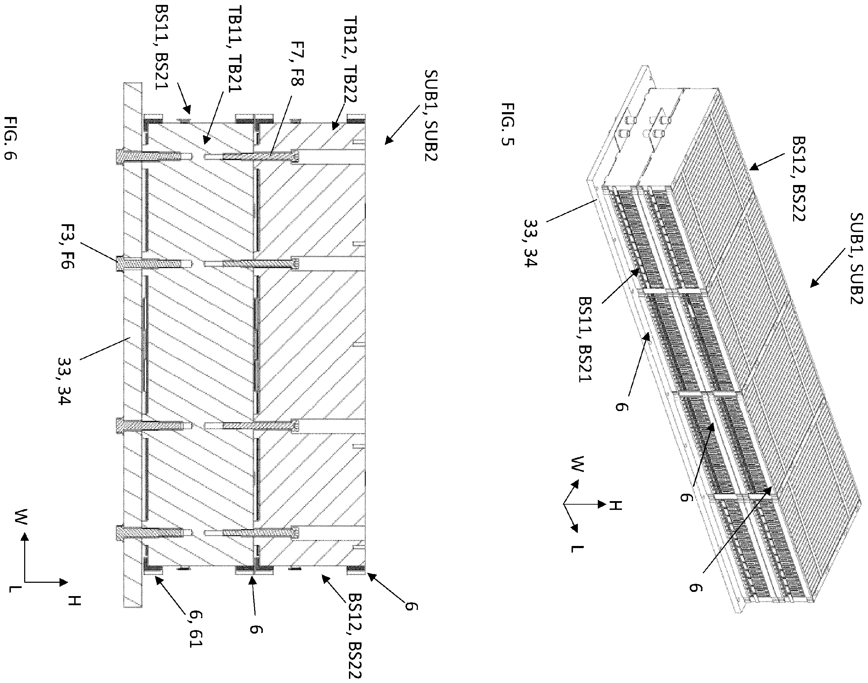

**FIG. 5** is an example of a sub-assembly SUB1, SUB2 in perspective view, comprising two battery cell stacks as e.g. shown in FIG. 4.

**FIG. 6** is an example of a sub-assembly SUB 1, SUB2 in a sectional view. The sub-assembly SUB1, SUB2 may e.g. be the sub-assembly shown in FIG. 5.

With reference to e.g. FIG. 6, it is shown that the first secondary battery cell stack BS12 may further comprise at least one first secondary transverse beam member TB12 which extends in the width direction W. The first secondary battery cell stack BS12 may as shown be attached to the first primary battery cell stack BS11 via the first secondary transverse beam member TB12 and the first primary transverse beam member TB11, such as by at least one seventh fastener F7. In this respect it shall be noted that at least one transverse beam member of the at least one first secondary transverse beam member TB12 may as shown in FIG. 4 be an intermediate transverse beam member which is located in-between two adjacently arranged battery cells 2 of the respective battery cell stack. Additionally, or alternatively, at least one transverse beam member of the at least one first secondary transverse beam member TB12 may as shown be an outer end transverse beam member.

Additionally, or alternatively, the second secondary battery cell stack BS22 may as shown in FIG. 6 further comprise at least one second secondary transverse beam member TB22 which extends in the width direction W. The second secondary battery cell stack BS22 may be attached to the second primary battery cell stack BS21 via the second secondary transverse beam member TB22 and the second primary transverse beam member TB21, such as by at least one eighth fastener F8. In this respect it shall be noted that at least one transverse beam member of the at least one second secondary transverse beam TB22 may as shown in e.g. FIG. 4 be an intermediate transverse beam member which is located in-between two adjacently arranged battery cells 2 of the respective battery cell stack. Additionally, or alternatively, at least one transverse beam member of the at least one second secondary transverse beam member TB22 may as shown be an outer end transverse beam member.

With reference to e.g. FIGS. 3-6, it is shown that at least one of the plurality of battery cell stacks BS11, BS12, BS21, BS22 may further comprise a longitudinally extending side beam member 6 arranged to support the plurality of battery cells 2 of the battery cell stack BS11, BS12, BS21, BS22, wherein the longitudinally extending side beam member 6 is provided at a longitudinally extending corner 61 of the battery cell stack. In the shown examples, each battery cell stack BS11, BS12, BS21, BS22 comprises four longitudinally extending side beam members 6, one for each longitudinally extending corner. For example, as shown, the longitudinally extending side beam member may be L-shaped, as seen in a sectional view which is perpendicular to the longitudinal direction L. In the shown example, the L-shaped longitudinally extending side beam member 6 is provided at the longitudinally extending corner 61 of the battery cell stack such that it partly encloses the bottom surfaces and the adjacent intermediate side surfaces of the battery cells 2.

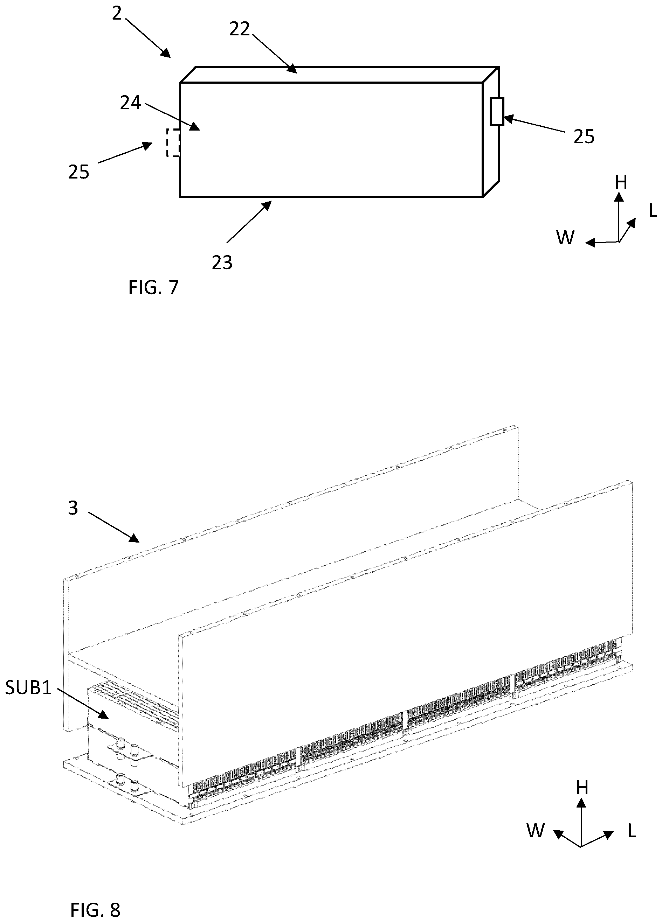

**FIG. 7** is an exemplary battery cell 2 according to an example of the plurality of battery cells 2 as mentioned in the above. As shown, the plurality of battery cells 2 may be prismatic battery cells with a bottom surface 21, a top surface 22 and four intermediate side surfaces 23. In some examples, the prismatic battery cell may be referred to as a box-shaped battery cell. As further shown, each one of the prismatic battery cells 2 preferably comprises an electric terminal 25 which is provided on an intermediate side surface which faces away from the battery cell 2 in a direction along the width direction W. For example, there may be at least one electrical terminal 25 on each side which faces away from the battery cell 2 in a direction along the width direction W, i.e., on two opposite sides of the battery cell 2.

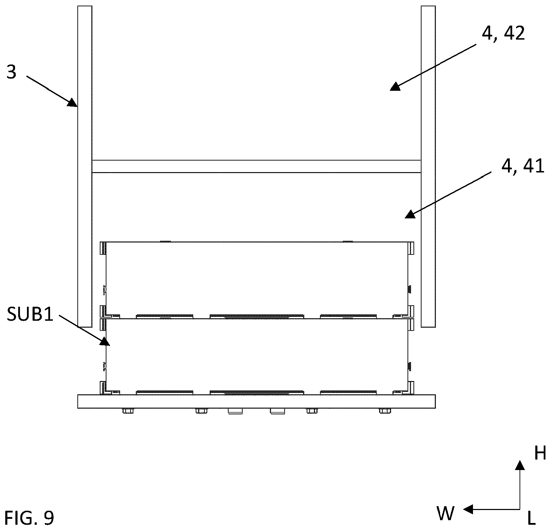

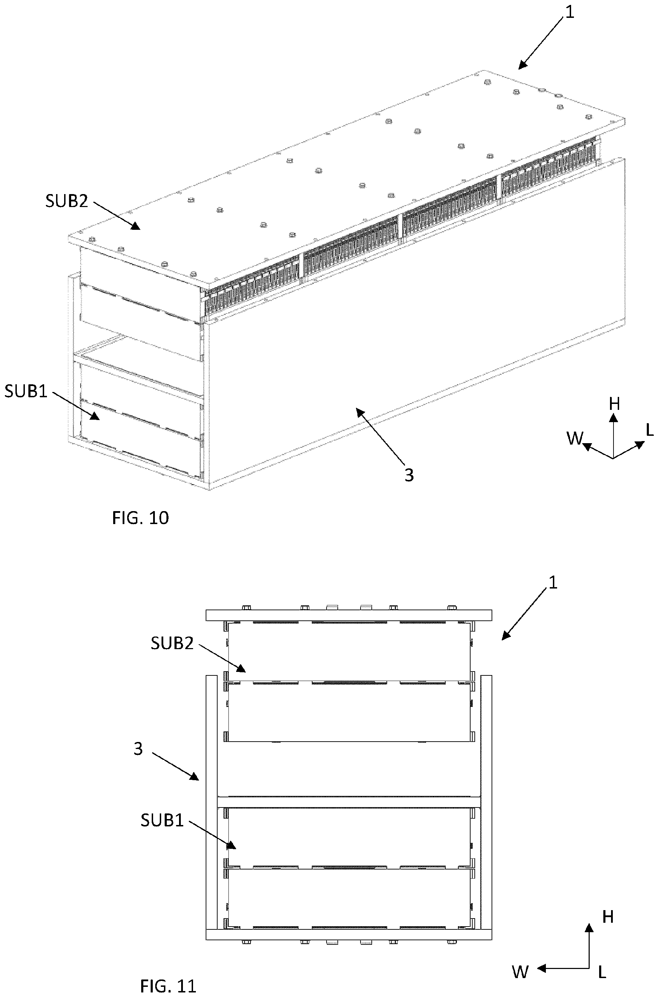

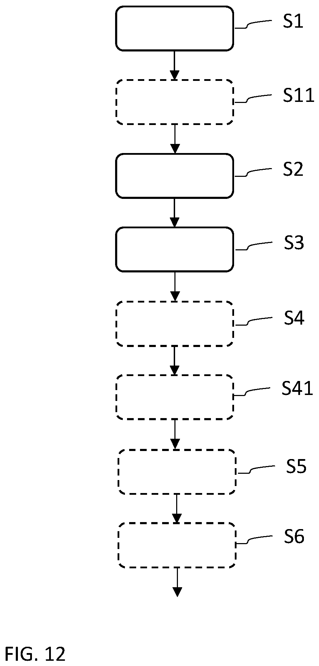

**FIG. 8** is an exemplary housing structure 3 and sub-assembly SUB1 in perspective view according to an example. **FIG. 9** is an exemplary housing structure 3 and sub-assembly SUB1 in a sectional view according to an example. **FIG. 10** is an exemplary battery pack 1 in a perspective view according to an example, with first and second sub-assemblies SUB1, SUB2 as disclosed herein. **FIG. 11** is an exemplary battery pack 1 in a sectional view according to an example, with first and second sub-assemblies SUB1, SUB2 as disclosed herein. **FIG. 12** is a flowchart of a method for assembling a battery pack 1 according to an example.

With reference to e.g. FIGS. 8-12, a method for assembling a battery pack 1 as disclosed herein according to an example will be described.

The method comprises the following actions:
S1: providing a first sub-assembly SUB1 (as e.g. shown in FIG. 5) comprising the first primary battery cell stack BS11 attached to the first base plate 33,
S2: inserting the first sub-assembly SUB1 into the first sub-space 41, and
S3: attaching the first sub-assembly to the first side wall 31, such as by the at least one first fastener F1, and to the second side wall 32, such as by the at least one second fastener F2 (see also FIG. 2), via the first base plate 33.

The method may further comprise, indicated by a box S11 with dashed lines in FIG. 12:
S11: attaching the first secondary battery cell stack BS12 to the first primary battery cell stack BS11, such as by the at least one seventh fastener F7, prior to inserting the first sub-assembly SUB1 into the first sub-space 41.

The method may further comprise, indicated by a boxes S4-S6 with dashed lines in FIG. 12:
S4: providing a second sub-assembly SUB2 comprising the second primary battery cell stack BS21 attached to the second base plate 34,
S5: inserting the second sub-assembly SUB2 into the second sub-space 42, and
S6: attaching the second sub-assembly SUB2 to the first side wall 31, such as by the at least one fourth fastener F4, and to the second side wall 32, such as by the at least one fifth fastener F5, via the second base plate 34.

It shall be noted that the actions S4-S6 may be performed at least partly concurrently with the actions S1-S3. The actions S4-S6 may alternatively be performed before or after the actions S1-S3.

The method may further comprise, indicated by a box S41 with dashed lines in FIG. 12:
S41: attaching the second secondary battery cell stack BS22 to the second primary battery cell stack BS21, such as by the at least one eighth fastener F8, prior to inserting the second sub-assembly SUB2 into the second sub-space 42.

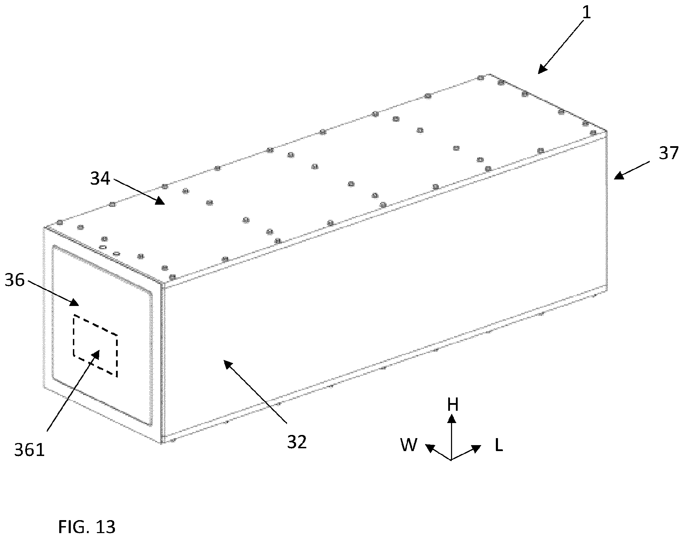

**FIG. 13** is an exemplary battery pack 1 in a perspective view according to an example. As shown, the battery pack 1 may further comprise a first end plate 36 provided at a first outer end of the battery pack 1 in the longitudinal direction L and a second end plate 37 provided at a second outer end of the battery pack 1 in the longitudinal direction L, wherein the first and second end plates 36, 37are arranged to close the accommodation space 4 at its respective first and second outer end. For example, as shown, at least one of the first and second end plate 36, 37 may comprise a coolant path 361 for coolant to/from the plurality of battery cell stacks and/or an opening 361 for electric elements, such as an electric cable.

In the following, features and possible feature combinations of the present disclosure are presented as a list of Examples:
Example 1: A battery pack (1), the battery pack (1) having a longitudinal extension along a longitudinal direction (L), a width extension along a width direction (W) and a height extension along a height direction (H), the battery pack (1) comprising:
   - a plurality of battery cell stacks (BS11, BS12, BS21, BS22), each one comprising a plurality of battery cells (2) arranged along the longitudinal direction (L), the plurality of battery cell stacks (BS11, BS12, BS21, BS22) comprising a first primary battery cell stack (BS11) and a second primary battery cell stack (BS21),
   - a housing structure (3) accommodating the plurality of battery cell stacks (BS11, BS12, BS21, BS22), the housing structure (3) comprising a first side wall (31), a second side wall (32), a first base plate (33), a second base plate (34) and a partition wall (35),
   wherein
   each one of the first and second side walls (31, 32) extends in the longitudinal direction (L) and the height direction (H) and each one of the first and second base plates (33, 34) extends in the longitudinal direction (L) and the width direction (W),
   the first and second side walls (31, 32) are offset from each other in the width direction (W) and the first and second base plates (33, 34) are offset from each other in the height direction (H) such that an accommodation space (4) accommodating the plurality of battery cell stacks (BS11, BS12, BS21, BS22) is formed therebetween,
   the partition wall (35) extends in the longitudinal direction (L) and the width direction (W) in the accommodation space (4) and separates the accommodation space such that a first sub-space (41) and a second sub-space (42) arranged along the height direction (H) are formed therein,
   the first primary battery cell stack (BS11) is provided in the first sub-space (41) which is adjacent the first base plate (33) and the second primary battery cell stack (BS21) is provided in the second sub-space (42) which is adjacent the second base plate (34),
   the first primary battery cell stack (BS11) further comprises at least one first primary transverse beam member (TB 11) extending in the width direction (W),
   the first base plate (33) is attached to the first side wall (31) and to the second side wall (32), and
   the first primary battery cell stack (BS 11) is attached to the first base plate (33) via the at least one first primary transverse beam member (TB 11).
Example 2: The battery pack (1) according to Example 1, wherein the second primary battery cell stack (BS21) further comprises at least one second primary transverse beam member (TB21) extending in the width direction (W),
   the second base plate (34) is attached to the first side wall (31) and to the second side wall (32), and
   the second primary battery cell stack (BS21) is attached to the second base plate (34) via the at least one second primary transverse beam member (TB21).
Example 3: The battery pack (1) according to any one of the preceding Examples, wherein the plurality of battery cell stacks (BS11, BS12, BS21, BS22) further comprises a first secondary battery cell stack (BS12) provided in the first sub-space (41) and located closer to the partition wall (35) along the height direction (H) than the first primary battery cell stack (BS11).
Example 4: The battery pack (1) according to Example 3, wherein the first secondary battery cell stack (BS12) further comprises at least one first secondary transverse beam member (TB12) extending in the width direction (W), and wherein the first secondary battery cell stack (BS12) is attached to the first primary battery cell stack (BS 11) via the first secondary transverse beam member (TB12) and the first primary transverse beam member (TB 11).
Example 5: The battery pack (1) according to any one of the preceding Examples, wherein the plurality of battery cell stacks (BS11, BS12, BS21, BS22) further comprises a second secondary battery cell stack (BS22) provided in the second sub-space (42) and located closer to the partition wall (35) along the height direction (H) than the second primary battery cell stack (BS21).
Example 6: The battery pack (1) according to Example 5, wherein the second secondary battery cell stack (BS22) further comprises at least one second secondary transverse beam member (TB22) extending in the width direction (W), and wherein the second secondary battery cell stack (BS22) is attached to the second primary battery cell stack (BS21) via the second secondary transverse beam member and the second primary transverse beam member.
Example 7: The battery pack (1) according to any one of the preceding Examples, wherein at least one transverse beam member of the at least one first primary transverse beam member (TB 11), the at least one second primary transverse beam member (TB21), the at least one first secondary transverse beam member (TB12) according to Example 4, and/or the at least one second secondary transverse beam (TB22) according to Example 6 is an intermediate transverse beam member which is located in-between two adjacently arranged battery cells (2) of the respective battery cell stack.
Example 8: The battery pack (1) according to any one of the preceding Examples, wherein at least one of the plurality of battery cell stacks (BS11, BS12, BS21, BS22) further comprises a cooling plate member (5) extending in the longitudinal direction (L) and the width direction (W), and being provided adjacent the plurality of battery cells (2), wherein the cooling plate member (5) comprises at least one coolant conduit (51) for coolant.
Example 9: The battery pack (1) according to any one of the preceding Examples, wherein the plurality of battery cells (2) are prismatic battery cells with a bottom surface (21), a top surface (22) and four intermediate side surfaces (23).
Example 10: The battery pack (1) according to Example 9, wherein each one of the prismatic battery cells (2) comprises an electric terminal (25) which is provided on an intermediate side surface which faces away from the battery cell in a direction along the width direction (W).
Example 11: The battery pack (1) according to any one of Examples 9 or 10, wherein at least one of the plurality of battery cell stacks (BS11, BS12, BS21, BS22) further comprises a longitudinally extending side beam member (6) arranged to support the plurality of battery cells of the battery cell stack (BS11, BS12, BS21, BS22), wherein the longitudinally extending side beam member (6) is provided at a longitudinally extending corner (61) of the battery cell stack.
Example 12: The battery pack (1) according to Example 11, wherein the longitudinally extending side beam member is L-shaped, as seen in a sectional view which is perpendicular to the longitudinal direction (L).
Example 13: The battery pack (1) according to anyone of the preceding Examples, wherein the partition wall (35) attaches the first and second side walls (31, 32) to each other, such as by welds.
Example 14: The battery pack (1) according to anyone of the preceding Examples, further comprising a first end plate (36) provided at a first outer end of the battery pack (1) in the longitudinal direction (L) and a second end plate (37) provided at a second outer end of the battery pack (1) in the longitudinal direction (L), wherein the first and second end plates (36, 37) are arranged to close the accommodation space (4) at its respective first and second outer end.
Example 15: The battery pack (1) according to Example 14, wherein at least one of the first and second end plate (36, 37) comprises a coolant path (361) for coolant to/from the plurality of battery cell stacks and/or an opening (361) for electric elements, such as an electric cable.
Example 16: A vehicle (100) comprising a battery pack (1) according to any one of the preceding Examples.
Example 17: A method for assembling a battery pack (1) according to any one of Examples 1-15, comprising:
   - providing (S1) a first sub-assembly (SUB 1) comprising the first primary battery cell stack (BS1 1) attached to the first base plate (33),
   - inserting (S2) the first sub-assembly (SUB1) into the first sub-space (41), and
   - attaching (S3) the first sub-assembly to the first side wall (31) and to the second side wall (32) via the first base plate (33).
Example 18: The method according to Example 17, further comprising:
   - providing (S4) a second sub-assembly (SUB2) comprising the second primary battery cell stack (BS21) according to Example 2 attached to the second base plate (34),
   - inserting (S5) the second sub-assembly (SUB2) into the second sub-space (42), and
   - attaching (S6) the second sub-assembly (SUB2) to the first side wall (31) and to the second side wall (32) via the second base plate (34).
Example 19: The method according to Example 18, further comprising:
   - attaching (S41) the second secondary battery cell stack (BS22) according to Example 6 to the second primary battery cell stack (BS21) prior to inserting the second sub-assembly (SUB2) into the second sub-space (42).
Example 20: The method according to any one of Examples 17-19, further comprising:
   - attaching (S11) the first secondary battery cell stack (BS12) according to Example 4 to the first primary battery cell stack (BS1 1) prior to inserting the first sub-assembly (SUB1) into the first sub-space (41).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1), the battery pack (1) having a longitudinal extension along a longitudinal direction (L), a width extension along a width direction (W) and a height extension along a height direction (H), the battery pack (1) comprising:
- a plurality of battery cell stacks (BS11, BS12, BS21, BS22), each one comprising a plurality of battery cells (2) arranged along the longitudinal direction (L), the plurality of battery cell stacks (BS11, BS12, BS21, BS22) comprising a first primary battery cell stack (BS11) and a second primary battery cell stack (BS21),
- a housing structure (3) accommodating the plurality of battery cell stacks (BS11, BS12, BS21, BS22), the housing structure (3) comprising a first side wall (31), a second side wall (32), a first base plate (33), a second base plate (34) and a partition wall (35),
wherein
each one of the first and second side walls (31, 32) extends in the longitudinal direction (L) and the height direction (H) and each one of the first and second base plates (33, 34) extends in the longitudinal direction (L) and the width direction (W),
the first and second side walls (31, 32) are offset from each other in the width direction (W) and the first and second base plates (33, 34) are offset from each other in the height direction (H) such that an accommodation space (4) accommodating the plurality of battery cell stacks (BS11, BS12, BS21, BS22) is formed therebetween,
the partition wall (35) extends in the longitudinal direction (L) and the width direction (W) in the accommodation space (4) and separates the accommodation space such that a first sub-space (41) and a second sub-space (42) arranged along the height direction (H) are formed therein,
the first primary battery cell stack (BS11) is provided in the first sub-space (41) which is adjacent the first base plate (33) and the second primary battery cell stack (BS21) is provided in the second sub-space (42) which is adjacent the second base plate (34),
the first primary battery cell stack (BS11) further comprises at least one first primary transverse beam member (TB 11) extending in the width direction (W),
the first base plate (33) is attached to the first side wall (31) and to the second side wall (32), and
the first primary battery cell stack (BS 11) is attached to the first base plate (33) via the at least one first primary transverse beam member (TB 11).

2. The battery pack (1) according to claim 1, wherein the second primary battery cell stack (BS21) further comprises at least one second primary transverse beam member (TB21) extending in the width direction (W),
the second base plate (34) is attached to the first side wall (31) and to the second side wall (32), and
the second primary battery cell stack (BS21) is attached to the second base plate (34) via the at least one second primary transverse beam member (TB21).

3. The battery pack (1) according to any one of the preceding claims, wherein the plurality of battery cell stacks (BS11, BS12, BS21, BS22) further comprises a first secondary battery cell stack (BS12) provided in the first sub-space (41) and located closer to the partition wall (35) along the height direction (H) than the first primary battery cell stack (BS11).

4. The battery pack (1) according to claim 3, wherein the first secondary battery cell stack (BS12) further comprises at least one first secondary transverse beam member (TB12) extending in the width direction (W), and wherein the first secondary battery cell stack (BS12) is attached to the first primary battery cell stack (BS11) via the first secondary transverse beam member (TB12) and the first primary transverse beam member (TB11).

5. The battery pack (1) according to any one of the preceding claims, wherein the plurality of battery cell stacks (BS11, BS12, BS21, BS22) further comprises a second secondary battery cell stack (BS22) provided in the second sub-space (42) and located closer to the partition wall (35) along the height direction (H) than the second primary battery cell stack (BS21).

6. The battery pack (1) according to claim 5, wherein the second secondary battery cell stack (BS22) further comprises at least one second secondary transverse beam member (TB22) extending in the width direction (W), and wherein the second secondary battery cell stack (BS22) is attached to the second primary battery cell stack (BS21) via the second secondary transverse beam member and the second primary transverse beam member.

7. The battery pack (1) according to any one of the preceding claims, wherein at least one transverse beam member of the at least one first primary transverse beam member (TB 11), the at least one second primary transverse beam member (TB21), the at least one first secondary transverse beam member (TB12) according to claim 4, and/or the at least one second secondary transverse beam (TB22) according to claim 6 is an intermediate transverse beam member which is located in-between two adjacently arranged battery cells (2) of the respective battery cell stack.

8. The battery pack (1) according to any one of the preceding claims, wherein at least one of the plurality of battery cell stacks (BS11, BS12, BS21, BS22) further comprises a cooling plate member (5) extending in the longitudinal direction (L) and the width direction (W), and being provided adjacent the plurality of battery cells (2), wherein the cooling plate member (5) comprises at least one coolant conduit (51) for coolant.

9. The battery pack (1) according to any one of the preceding claims, wherein the plurality of battery cells (2) are prismatic battery cells with a bottom surface (21), a top surface (22) and four intermediate side surfaces (23).

10. The battery pack (1) according to claim 9, wherein each one of the prismatic battery cells (2) comprises an electric terminal (25) which is provided on an intermediate side surface which faces away from the battery cell in a direction along the width direction (W).

11. The battery pack (1) according to any one of claims 9 or 10, wherein at least one of the plurality of battery cell stacks (BS11, BS12, BS21, BS22) further comprises a longitudinally extending side beam member (6) arranged to support the plurality of battery cells of the battery cell stack (BS11, BS12, BS21, BS22), wherein the longitudinally extending side beam member (6) is provided at a longitudinally extending corner (61) of the battery cell stack.

12. The battery pack (1) according to claim 11, wherein the longitudinally extending side beam member is L-shaped, as seen in a sectional view which is perpendicular to the longitudinal direction (L).

13. The battery pack (1) according to anyone of the preceding claims, wherein the partition wall (35) attaches the first and second side walls (31, 32) to each other, such as by welds.

14. A vehicle (100) comprising a battery pack (1) according to any one of the preceding claims.

15. A method for assembling a battery pack (1) according to any one of claims 1-13, comprising:
- providing (S1) a first sub-assembly (SUB 1) comprising the first primary battery cell stack (BS1 1) attached to the first base plate (33),
- inserting (S2) the first sub-assembly (SUB1) into the first sub-space (41), and
- attaching (S3) the first sub-assembly to the first side wall (31) and to the second side wall (32) via the first base plate (33).
